# EUROPÄISCHE PATENTSCHRIFT

(11) **EP 3 994 371 B1**
(45) Veröffentlichungstag und Bekanntmachung des Hinweises auf die Patenterteilung: **14.05.2025**
(21) Anmeldenummer: 20740195.1
(22) Anmeldetag: 28.05.2020
(51) Int. Cl.: F16D 65/18, A63C 17/14, B60B 3/00, B60K 7/00, F16D 55/28, F16D 55/32

(54) **RADMODUL MIT EINER BREMSEINHEIT SOWIE FAHRZEUG MIT DEM RADMODUL**
WHEEL MODULE COMPRISING A BRAKE UNIT, AND VEHICLE COMPRISING THE WHEEL MODULE
MODULE DE ROUE DOTÉ D'UNE UNITÉ DE FREINAGE ET VÉHICULE POURVU DU MODULE DE ROUE

(30) Priorität: 03.07.2019 DE 102019117961
(43) Veröffentlichungstag der Anmeldung: 11.05.2022
(73) Patentinhaber: Schaeffler Technologies AG & Co. KG, 91074 Herzogenaurach (DE)
(72) Erfinder: ORTMANN, Simon, 76532 Baden-Baden (DE); WAGNER, Philippe, 67460 Souffelweyersheim (FR); WIMMER, Doris Maria, 77883 Ottenhöfen (DE); BARRERA, Alan, 76133 Karlsruhe (DE); GRAUSS, Aurelien, 67670 Mommenheim (FR)
(86) Internationale Anmeldenummer: PCT/DE2020/100452
(87) Internationale Veröffentlichungsnummer: WO 2021/000985

(56) Entgegenhaltungen:
- EP-A1- 0 291 430
- WO-A1-2020/098859
- US-A- 2 581 941
- US-A1- 2002 043 777
- US-A1- 2016 059 108

## Beschreibung

Die Erfindung betrifft ein Radmodul mit einer Bremseinheit sowie ein Fahrzeug mit dem Radmodul.

Bei muskelbetriebenen Fahrzeugen, wie zum Beispiel Fahrrädern etc., ist es bekannt, Trommelbremsen, Scheibenbremsen oder Backenbremsen einzusetzen. Jedes der Bremssysteme hat unterschiedliche Vorteile in Bezug auf die Bremswirkung, die Systemkosten, Wartungsfreundlichkeit etc.

Beispielsweise beschreibt die Druckschrift DE 200 16 878 U1 einen Tretroller mit einer Bremseinrichtung, die als eine hydraulisch aktivierbare Scheibenbremse ausgebildet ist. Die Bremseinrichtung weist eine mit einem Rad drehfest verbundene Bremsscheibe und einen fest mit dem Rahmen des Tretrollers verbundenen Bremssattel auf, wobei der Bremssattel auf die Bremsscheibe wirkende Bremsbeläge enthält. Ein Radmodul nach dem Oberbegriff des Anspruchs 1 ist in der US 2002/0043777 A1 offenbart. Weiterer Stand der Technik ist aus der EP 0 291 430 A1 sowie der US 2 581 941 A beschrieben.

Es ist Aufgabe der vorliegenden Erfindung, ein Radmodul mit einer Bremseinheit mit einem abgewandelten Aufbau für ein Fahrzeug vorzuschlagen. Diese Aufgabe wird durch ein Radmodul mit den Merkmalen des Anspruchs 1 sowie durch ein Fahrzeug mit den Merkmalen des Anspruchs 6 gelöst. Bevorzugte oder vorteilhafte Ausführungsformen der Erfindung ergeben sich aus den Unteransprüchen, der nachfolgenden Beschreibung sowie den beigefügten Figuren.

Gegenstand der Erfindung ist eine Bremseinheit, welche für ein Fahrzeug geeignet und/oder ausgebildet ist. Insbesondere ist das Fahrzeug als ein ein- oder mehrspuriges Fahrzeug, ausgebildet. Vorzugsweise ist das Fahrzeug als ein elektrisch angetriebenes Fahrzeug ausgebildet. Zum Beispiel ist das Fahrzeug ein Elektrokleinstfahrzeug, wobei unter "Elektrokleinstfahrzeug" Fahrzeuge ohne Sitz oder selbstbalancierende Fahrzeuge mit oder ohne Sitz zu verstehen sind.

Bevorzugt ist das Fahrzeug als ein Klein- oder Kleinstfahrzeug oder als ein Elektromobil ausgebildet. Das Fahrzeug weist vorzugsweise mindestens ein Rad auf. Mit nur einem Rad kann das Fahrzeug als ein elektrisches Einrad, z.B. als ein sogenanntes Monowheel oder Solowheel ausgebildet sein. Mit zwei oder mehr Rädern ist das Fahrzeug bevorzugt als ein Roller, insbesondere als ein Elektromotorrad, als ein Elektromotorroller, als ein Elektroroller, Elektrotretroller, Elektroscooter, z.B. E-Scooter, als ein Segway, Hoverboard, Kickboard, Skateboard, Longboard o.ä. ausgebildet. Alternativ kann das Fahrzeug als ein Fahrrad, insbesondere als ein Elektrofahrrad, z.B. als ein Pedelec oder als ein E-Bike ausgebildet sein. Das Fahrzeug kann alternativ als ein mehrspuriges Fahrrad, insbesondere mit drei oder mehr Rädern ausgebildet sein. Beispielsweise kann das Fahrzeug ein Transport- oder Lastenrad, insbesondere ein motorisiertes bzw. elektrisch angetriebenes Transport- oder Lastenrad, im Speziellen ein Dreirad- oder Vierrad-Pedelec oder eine Rikscha, insbesondere mit oder ohne Dach, oder ein Kabinenroller sein.

Das Fahrzeug kann ein oder mehrere der Bremseinheiten umfassen. Die Bremseinheit weist ein Gehäuse auf, wobei das Gehäuse an dem Fahrzeug stationär und/oder drehfest angeordnet und/oder anordbar ist. Vorzugsweise ist das Gehäuse koaxial zu einer stationären oder rotierenden Radachse des Fahrzeugs angeordnet. Insbesondere durchstößt die Radachse das Gehäuse. Hierzu weist das Gehäuse beispielsweise eine Durchgangsöffnung zur Aufnahme der Radachse auf.

Die Bremseinheit weist eine Bremskörpereinrichtung auf, wobei die Bremskörpereinrichtung einen stationären Bremspartner für eine Bremsvorrichtung für das Fahrzeug trägt. Insbesondere bildet die Bremskörpereinrichtung den stationären Bremspartner in dem Gehäuse, wobei ein rotierender Bremspartner drehfest mit einem Rad des Fahrzeugs verbunden ist.

Die Bremseinheit weist eine Hauptachse auf, wobei die Hauptachse als eine konstruktive und/oder gedachte Hilfsachse zu verstehen ist. Die Hauptachse kann beispielsweise durch das Gehäuse, insbesondere durch die Durchgangsöffnung oder die Radachse definiert sein. Alternativ oder ergänzend kann die Hauptachse durch die Bremskörpereinrichtung definiert sein.

Die Bremseinheit weist eine Aktoreinrichtung zur Bewegung, insbesondere Betätigung der Bremskörpereinrichtung auf. Insbesondere wird die Bremskraft von der Bremskörpereinrichtung, insbesondere von dem stationären Bremspartner an den rotierenden Bremspartner übertragen. In der allgemeinsten Ausprägung der Erfindung kann die Aktoreinrichtung hydraulisch, betätigbar sein.

Im Rahmen der Erfindung wird vorgeschlagen, dass der stationäre Bremspartner als eine Bremsscheibe ausgebildet ist. Insbesondere umläuft die Bremsscheibe die Hauptachse vollständig und/oder um 360°. Die Bremsscheibe kann geometrisch als Scheibe oder Ringscheibe realisier sein, alternativ kann diese als ein Abschnitt aus einer größeren Komponente ausgebildet sein und somit einen Bremsscheibenabschnitt in dieser Komponente bilden.

Es ist dabei eine Überlegung der Erfindung, dass durch den Einsatz einer stationären Bremsscheibe der Gesamtaufbau der Bremsvorrichtung neu ausgelegt werden kann und sich Eigenschaften der Bremsvorrichtung ändern. So ist es möglich, die Bremsscheibe axial weiter nach außen zu legen und trotzdem die Aktoreinrichtung am stationären Teil der Bremsvorrichtung anzuordnen, so dass die Anzahl und/oder das Gewicht der rotierenden Teile klein gehalten werden. Durch die Anordnung der Bremseinheit und damit der Bremsscheibe auf einer axialen Außenseite des Rads vom Fahrrad wird zudem das Temperaturmanagement der Bremsvorrichtung verändert, da sich die Bremsscheibe bekanntermaßen bei starken Bremsvorgängen aufheizt. Dadurch dass die Bremsscheibe axial außen sitzt, kann die Wärme besser abgeführt und damit die Bremsscheibe besser gekühlt werden.

Bei einer bevorzugten Ausgestaltung der Erfindung ist die Bremsscheibe aus Metall oder Keramik ausgebildet. Insbesondere ist der stationäre Bremspartner als der harte Bremspartner ausgebildet, wohingegen der rotierende Bremspartner als der weiche Bremspartner realisiert ist. Durch die hohe Wärmeleitfähigkeit insbesondere des Metalls wird die Wärme, welche aufgrund von starken Bremsvorgängen entsteht, gleichmäßig auf oder in der Bremsscheibe verteilt und/oder abgeführt.

Die Bremsscheibe stellt eine Bremsfläche bereit, wobei die Bremsfläche vorzugsweise als eine Ringfläche, insbesondere eine Kreisringfläche zur Einleitung der Bremskraft ausgebildet ist. Insbesondere ist die Bremsfläche durch eine Materialoberfläche der Bremskörpereinrichtung gebildet. Beispielsweise kann die Bremsfläche durch eine behandelte Oberfläche der Bremsscheibe gebildet sein z.B. durch Schleifen und/oder Honen der Oberfläche, um z.B. eine Rauheit der Bremsfläche zu verkleinern.

Die Bremsfläche ist vorzugsweise in radialer Richtung in Bezug auf die Radachse auf der Bremsscheibe ausgebildet und/oder erstreckt sich in einer Radialebene zu der Hauptachse. Die Bremsfläche ist vorzugsweise ausschließlich einseitig auf der Bremsscheibe ausgebildet. Insbesondere ist die Bremsfläche auf einer axial inneren Seite der Bremseinheit angeordnet. Alternativ oder ergänzend ist die Bremsfläche umlaufend, insbesondere ununterbrochenen oder weitgehend ununterbrochen, zu der Hauptachse ausgebildet. Wie es bei Bremsscheiben üblich ist, kann bei allen Alternativen die Bremsfläche durch Lüftungslöcher, Befestigungslöcher oder ähnliches durchbrochen sein. Die genannten Alternativen reflektieren den Umstand, dass die Bremsscheibe hinsichtlich der Bremsfläche nicht auf ein Segment beschränkt ist, sondern sich über 360° um die Hauptachse erstreckt. Damit ist die Fläche zum Einleiten von Bremsenergie vergleichsweise groß ausgebildet, so dass die aus Bremsvorgängen resultierende Wärme vergleichsweise niedrig bleibt.

Bei einer bevorzugten Weiterbildung der Erfindung ist vorgesehen, dass die Aktoreinrichtung die Bremskörpereinrichtung relativ zu dem Gehäuse in axialer Richtung zu der Hauptachse bewegt. Somit wird die Bremsscheibe in axialer Richtung zugestellt, um die Bremskraft zu erzeugen.

Bei einer bevorzugten konstruktiven Ausgestaltung der Erfindung ist die Aktoreinrichtung als eine Hydraulikeinrichtung ausgebildet. Die Hydraulikeinrichtung ist somit zur hydraulischen Aktivierung der Bremsvorrichtung ausgebildet. Beispielsweise kann die Hydraulikeinrichtung durch einen Bremshebel des Fahrzeuges betätigt werden und die Bremsvorrichtung aktivieren, sodass ein rotierendes Rad abgebremst werden kann. Beispielsweise kann ein Zylinder der Hydraulikeinrichtung mit dem Gehäuse und ein Kolben der Hydraulikeinrichtung mit der Bremskörpereinrichtung wirkverbunden sein. Besonders bevorzugt sind der Zylinder mit dem Gehäuse und der Kolben mit der Bremskörpereinrichtung fest oder formschlüssig verbunden. Besonders bevorzugt kann die Hydraulikeinrichtung einen Ringraum und einen Ringkolben aufweisen, wobei der Ringkolben in dem Ringraum angeordnet ist. In dem Ringraum ist eine Hydraulikflüssigkeit zur Betätigung des Ringkolbens angeordnet. Der Ringraum und der Ringkolben sind umlaufend zu der Hauptachse ausgebildet.

Die Bremseinheit weist eine Führungseinrichtung auf, welche bei einem axialen Verfahren der Bremskörpereinrichtung relativ zu dem Gehäuse die Bremskörpereinrichtung in radialer Richtung, insbesondere zu der Hauptachse, führt. Hierdurch wird zum Beispiel ein Verkippen zwischen Bremskörpereinrichtung und Gehäuse vermieden.

Es ist vorgesehen, dass die Führungseinrichtung eine Masterführung und eine Hilfsführung aufweist. Somit weist die Führungseinrichtung mindestens oder genau zwei Führungen auf. Es ist vorgesehen, dass die Masterführung und die Hilfsführung außermittig zu der Hauptachse angeordnet sind. Insbesondere sind diese nicht koaxial, sondern versetzt zu der Hauptachse platziert.

Es ist dabei eine Überlegung der Weiterbildung, dass bei der Übertragung der Bremskraft von dem stationären Bremspartner zu dem rotierenden Bremspartner in den stationären Bremspartner neben axialen Kräften, insbesondere neben Bremskräften oder entsprechenden Gegenkräften, Drehmomente um die Hauptachse in die Bremskörpereinrichtung eingeleitet werden. Um ein Verkippen oder ein Verdrehen der Bremskörpereinrichtung relativ zu dem Gehäuse zu vermeiden, wird vorgeschlagen, die Führungseinrichtung mit mindestens oder genau zwei separaten Einzelführungen auszustatten.

Bei einer bevorzugten konstruktiven Ausgestaltung der Erfindung weist die Masterführung ein erstes radiales Spiel und die Hilfsführung ein zweites radiales Spiel auf. Das radiale Spiel kann zum einen lokal jeweils in der Masterführung und in der Hilfsführung gemessen werden. Ist die Masterführung und/oder die Hilfsführung rotationssymmetrisch ausgebildet, so kann das radiale Spiel lokal in jede Richtung in Bezug auf die Masterführung bzw. auf die Hilfsführung gemessen werden. Alternativ oder ergänzend kann das radiale Spiel jeweils in Umlaufrichtung um die Hauptachse gemessen werden. Somit wird das Drehmoment in Umlaufrichtung primär von der Masterführung und sekundär durch die Hilfsführung aufgenommen. Dies führt dazu, dass das Drehmoment sicher abgeleitet werden kann. Auf der anderen Seite wird durch das unterschiedliche radiale Spiel erreicht, dass keine Überdefinition der Bremseinheit in Umlaufrichtung um die Hauptachse vorliegt und dadurch ein Verklemmen der Bremskörpereinrichtung auch bei unterschiedlichen Temperaturen etc. vermieden ist.

Bei einer bevorzugten konstruktiven Ausgestaltung weist die Masterführung einen ersten Achsabschnitt auf, welcher an der Bremskörpereinrichtung angeordnet ist und insbesondere einen Bestandteil der Bremskörpereinrichtung bildet. Ferner weist die Masterführung einen ersten Führungsabschnitt auf, welcher an dem Gehäuse angeordnet ist und insbesondere einen Bestandteil des Gehäuses bildet. Der erste Achsabschnitt ist koaxial in dem ersten Führungsabschnitt angeordnet und wird durch diesen geführt. Alternativ oder ergänzend weist die Hilfsführung einen zweiten Achsabschnitt auf, welcher an der Bremskörpereinrichtung angeordnet ist und insbesondere einen Bestandteil der Bremskörpereinrichtung bildet. Ferner weist die Hilfsführung einen zweiten Führungsabschnitt auf, welcher an dem Gehäuse angeordnet ist und insbesondere einen Bestandteil des Gehäuses bildet. Der zweite Achsabschnitt ist koaxial in dem zweiten Führungsabschnitt angeordnet und wird durch diesen geführt. Das zweite radiale Spiel wird zwischen dem zweiten Achsabschnitt und dem zweiten Führungsabschnitt vorzugsweise in Umlaufrichtung um die Hauptachse oder alternativ um eine eigene Mittelachse gemessen. Vorzugsweise sind die Achsabschnitten und/oder die Führungsabschnitt in dem Führungsbereich rotationssymmetrisch ausgebildet.

Es kann vorgesehen sein, dass die Achsabschnitte jeweils eine Führungsfläche, somit eine erste und eine zweite Führungsfläche, zur Anlage an den Führungsabschnitten aufweisen. Diese Ausgestaltung hat den Vorteil, dass sehr wenige Komponenten oder Teile verwendet werden. Auf der anderen Seite müssen die Achsabschnitten bzw. die Führungsabschnitte aus einem entsprechenden funktionsgerechten Material ausgebildet sein. Alternativ ist es besonders bevorzugt, dass auf den ersten Achsabschnitt eine erste Führungshülse aufgesetzt ist, welche die erste Führungsfläche bereitstellt. Alternativ oder ergänzend weist der zweite Achsabschnitt eine zweite Führungshülse auf, welche die zweite Führungsfläche bereitstellt. Insbesondere ist die erste und/oder die zweite Führungshülse als ein gerader Hohlzylinder ausgebildet. Durch den Einsatz einer Führungshülse kann eine harte und damit verschleißarme Führungsfläche bereitgestellt werden, wobei jedoch die Achsabschnitte der Bremskörpereinrichtung aus einem beliebigen Material gebildet sein können.

Das erste radiale Spiel wird zwischen der ersten Führungsfläche, insbesondere dem ersten Achsabschnitt oder (wenn vorhanden) der ersten Führungshülse, und dem ersten Führungsabschnitt vorzugsweise in Umlaufrichtung um die Hauptachse oder alternativ um eine eigene Mittelachse gemessen. Das zweite radiale Spiel wird zwischen der zweiten Führungsfläche, insbesondere dem zweiten Achsabschnitt oder (wenn vorhanden) der zweiten Führungshülse, und dem zweiten Führungsabschnitt vorzugsweise in Umlaufrichtung um die Hauptachse oder alternativ um eine eigene Mittelachse gemessen.

Bei einer bevorzugten Weiterbildung der Erfindung weist das Gehäuse einen Gehäusegrundkörper auf. Der Gehäusegrundkörper kann beispielsweise durch Aluminiumdruckguss gefertigt sein. Es ist besonders bevorzugt vorgesehen, dass der erste und/oder der zweite Führungsabschnitt einstückig durch den Gehäusegrundkörper gebildet ist. Damit werden die Führungsabschnitte durch einen Abschnitt des Aluminiumdruckgusses gebildet und können dadurch kostengünstig hergestellt werden. Alternativ oder ergänzend weist die Bremskörpereinrichtung einen Bremsgrundkörper auf. Der Bremsgrundkörper kann beispielsweise durch Aluminiumdruckguss gefertigt sein. Es ist besonders bevorzugt vorgesehen, dass der erste und/oder der zweite Achsabschnitt einstückig durch den Bremsgrundkörper gebildet ist. Damit werden die Achsabschnitte durch einen Abschnitt des Aluminiumdruckgusses gebildet und können dadurch kostengünstig hergestellt werden.

In einer möglichen konstruktiven Ausgestaltung weist die Bremskörpereinrichtung eine Kraftverteilungsplatte auf. Die Kraftverteilungsplatte ist insbesondere als eine Blechplatte aus Metall realisiert. Die Kraftverteilungsplatte ist mit der Hydraulikeinrichtung wirkverbunden. Besonders bevorzugt weist die Kraftverteilungsplatte eine Anlagefläche für den Ringkolben oder für ein Adapterstück, welches sich an den Ringkolben abstützt, auf. Die Kraftverteilungsplatte ist über den ersten, den zweiten und zudem über mindestens oder genau einen dritten Achsabschnitt an die Bremskörpereinrichtung angebunden. Vorzugsweise ist die Kraftverteilungsplatte über die mindestens oder genau drei Achsabschnitte mit dem Bremsgrundkörper verbunden.

Bei einer bevorzugten konstruktiven Ausgestaltung kann vorgesehen sein, dass die drei Achsabschnitte in Umlaufrichtung regelmäßig verteilt sind, um die Bremskraft möglichst gleichmäßig in die Bremskörpereinrichtung einzuleiten. Der dritte Achsabschnitt ist in radialer Richtung und/oder in Umlaufrichtung mit einem noch größeren radialen Spiel als das erste und/oder zweite radiale Spiel oder überhaupt nicht geführt.

In einer bevorzugten Weiterbildung der Erfindung weist die Bremseinheit eine Rückstelleinrichtung zum Rückstellen der Bremskörpereinrichtung auf. Die Rückstelleinrichtung weist eine erste Rückstellfeder, eine zweite Rückstellfeder und eine dritte Rückstellfeder auf. Die erste Rückstellfeder ist der Masterführung, die zweite Rückstellfeder der Hilfsführung und die dritte Rückstellfeder ist dem dritten Achsabschnitt zugeordnet. Auf diese Weise wird auch die Rückstellkraft nach dem Bremsvorgang gleichmäßig eingeleitet. Auf der einen Seite stützen sich die Rückstellfedern und/oder die Rückstelleinrichtung an dem Gehäuse und auf der anderen Seite bevorzugt an dem Bremsgrundkörper ab.

Ein weiterer Gegenstand Erfindung betrifft ein Radmodul für ein oder das Fahrzeug, wobei das Radmodul eine Bremseinheit aufweist, wie diese zuvor beschrieben wurde. Das Fahrzeug kann ein oder mehrere der Radmodule umfassen. Das Radmodul weist ein Rad auf. Insbesondere ist das Rad ein Vorder- oder Hinterrad des Fahrzeugs. Das Rad umfasst eine Radfelge und bevorzugt einen Reifen, wobei der Reifen auf der Radfelge angeordnet ist. Besonders bevorzugt ist der Reifen ein mit Luft befüllter und/oder befüllbarer Gummireifen.

Es ist vorgesehen, dass das Radmodul einen rotierenden Bremspartner der Bremsvorrichtung aufweist, wobei der rotierende Bremspartner mit dem Rad und/oder der Radfelge drehfest verbunden ist. Besonders bevorzugt ist der rotierende Bremspartner als ein Bremsbelag ausgebildet oder umfasst diesen. Insbesondere werden bei einer Betätigung der Bremsvorrichtung, der Bremsbelag und die Bremsscheibe in axialer Richtung relativ zueinander bewegt und reibschlüssig und/oder kraftschlüssig miteinander in Kontakt gebracht, sodass ein Bremsmoment auf das Rad übertagen wird. Vorzugsweise bildet die Bremsscheibe einen metallischen Partner und der Bremsbelag einen Reibpartner. Im Speziellen sind die Bremsscheibe und der Bremsbelag derart aufeinander abgestimmt, sodass der Bremsbelag einer höheren Abnutzung unterliegt.

Insbesondere ist der Bremsbelag an einer axialen Stirnseite der Radfelge angeordnet. Vorzugsweise ist der Bremsbelag auf die Radfelge mittelbar oder unmittelbar aufgebracht. Insbesondere bedeckt der Bremsbelag zumindest abschnittsweise eine Außenseite der Radfelge. Prinzipiell kann der Bremsbelag in Umlaufrichtung unterbrochen oder in mehreren Abschnitten auf der Radfelge angeordnet sein. Besonders bevorzugt jedoch ist der Bremsbelag umlaufend durchgängig ausgebildet.

Ein Vorteil der Weiterbildung besteht darin, dass durch die Anordnung des Bremsbelages an der Felge, die Bremsvorrichtung besonders platzsparend an dem Rad angeordnet werden kann. Durch die Anordnung des Bremsbelags auf der Radfelge kann die Bremsvorrichtung zudem in einfacher Weise an eine Größe des Rades, insbesondere an eine Größe der Radfelge, angepasst werden. Insbesondere baut die Bremsvorrichtung, im Gegensatz zu gewöhnlichen Bremsbacken einer Scheibenbremse, nur geringfügig nach außen auf, sodass eine Gefahr von abstehenden Bauteilen, die sich zudem erhitzen können, deutlich reduziert wird.

In einer bevorzugten Ausgestaltung der Erfindung ist vorgesehen, dass der Bremsbelag axial stationär an der Radfelge verbleibt. Insbesondere ist die Bremsscheibe in Umlaufrichtung drehfest und in axialer Richtung verschiebbar zu der Radachse angeordnet. Besonders bevorzugt rotiert der Bremsbelag in einem Fahrbetrieb des Fahrzeugs um die Drehachse, wobei die Bremsscheibe in Umlaufrichtung stationär verbleibt. Bei einer Betätigung der Bremsvorrichtung wird die Bremsscheibe zur Erzeugung des Bremsmoments mit einer Bremskraft beaufschlagt und somit in einer axialen Richtung an den Bremsbelag gepresst.

Es ist somit eine Überlegung der Weiterbildung, dass durch die axiale Verschiebung der Bremsscheibe, radseitig nur noch der Bremsbelag benötigt wird. Somit wird eine kompakte und bauteilreduzierte Bremsvorrichtung vorgeschlagen. Zudem wird insbesondere für kleine Reifendurchmesser eine einfache Anbindung an die Radfelge ermöglicht.

In einer weiteren bevorzugten Ausführungsform der Erfindung ist der Bremsbelag ringförmig ausgebildet und in Bezug auf die Radachse koaxial und/oder konzentrisch zu der Radfelge angeordnet. Insbesondere definiert der Bremsbelag eine die Drehachse umlaufende Ringfläche, welche koaxial und/oder konzentrisch zu der Bremsscheibe und/oder der Radfelge und/oder der Radachse angeordnet ist. Besonders bevorzugt kontaktiert die Bremsscheibe in dem betätigten Zustand der Bremsvorrichtung flächig mit der Ringfläche. Es ist eine Überlegung der Weiterbildung, eine Bremsvorrichtung vorzuschlagen, welche sich durch eine verbesserte Bremsleistung auszeichnet. Durch die ringförmige Ausgestaltung des Bremsbelages, wird die mit der Bremsscheibe kontaktierende Kontaktfläche erhöht.

In einer weiteren bevorzugten Umsetzung bildet der Bremsbelag einen thermischen Isolator, sodass eine thermische Isolation in Richtung der Radfelge durch den Bremsbelag umgesetzt wird. Insbesondere reduziert der Bremsbelag einen Wärmeübergang von der Bremsvorrichtung, insbesondere bei einem Bremsvorgang, auf das Rad. Vorzugsweise ist der Bremsbelag aus einem thermisch isolierenden Material gebildet. Besonders bevorzugt weist das Material des Bremsbelags einen Wärmeleitkoeffizienten auf, welcher deutlich kleiner als ein Wärmeleitkoeffizient des Materials der Radfelge ist. Beispielsweise weist das Material des Bremsbelags einen Wärmeleitkoeffizienten von weniger als 10 W/(m*K), vorzugsweise weniger als 1 W/(m*K), im Speziellen weniger als 0,5 W/(m*K) auf.

Vorteilhaft ist, dass durch den Bremsbelag ein Wärmeübergang von dem Bremsbelag auf die Felge, durch Hitze, die insbesondere beim Abbremsen des rotierenden Rads entsteht, deutlich reduziert werden kann. Insbesondere kann dadurch eine Schädigung von der Radfelge und/oder von in dem Rad integrierte Komponenten, wie Lagereinrichtungen, Radantrieb etc., vermieden werden.

Es ist besonders bevorzugt, dass der Bremsbelag ein Reibmittel der Kategorie "Organic" aufweist. Insbesondere ist das Reibmittel aus einem organischen Material gefertigt. Besonders bevorzugt umfasst das Reibmittel Fasern aus Glas und/oder Gummi und/oder Karbon und/oder Aramid, insbesondere para-Aramid, welche insbesondere in eine Harzmatrix eingebettet sind. Vorzugsweise ist die Harzmatrix durch ein temperaturresistentes Kunst- oder Naturharz gebildet.

Es wird somit ein Bremsbelag vorgeschlagen, welcher sich durch einen hohen Reibungskoeffizienten und zugleich durch einen niedrigen Wärmeleit- bzw. Wärmeübergangskoeffizienten auszeichnet.

In einer ersten Konkretisierung ist vorgesehen, dass der Bremsbelag unmittelbar auf die Radfelge aufgebracht ist. Insbesondere ist der Bremsbelag in die Radfelge integriert oder auf der Radfelge, vorzugsweise als eine Beschichtung, aufgetragen. Alternativ oder optional ergänzend ist der Bremsbelag stoffschlüssig mit der Radfelge verbunden. Insbesondere kann der Bremsbelag auf die Felge aufgeklebt sein. Beispielsweise kann hierzu ein Klebstoff verwendet werden, welcher ebenfalls thermisch isolierende Eigenschaften aufweist und/oder mit einem thermisch isolierenden Additiv versetzt ist. Es ist somit eine Überlegung der Weiterbildung, einen Bremsbelag vorzuschlagen, welcher sich durch eine besonders geringe axiale Baubreite auszeichnet.

In einer alternativen Konkretisierung ist vorgesehen, dass die Bremsvorrichtung einen ringförmigen Bremsbelagträger aufweist, welcher insbesondere den Bremsbelag trägt. Der Bremsbelag ist über den Bremsbelagträger an der Radfelge, vorzugsweise kraftschlüssig und/oder formschlüssig und/oder stoffschlüssig, befestigt und/oder befestigbar. Besonders bevorzugt ist der Bremsbelagträger lösbar, insbesondere über eine Schraubverbindung, an der Radfelge befestigt. Im Speziellen ist der Bremsbelagträger über ein oder mehrere Befestigungsmittel, wie z.B. Schrauben, Niete oder ähnliches, an der Radfelge befestigt. Beispielsweise kann der Bremsbelagträger aus einem Material gefertigt sein werden, welches ebenfalls thermisch isolierende Eigenschaften aufweist und zugleich hitzebeständig ist. Besonders bevorzugt ist der Bremsbelagträger koaxial und/oder konzentrisch zu der Radfelge und/oder der Radachse angeordnet. Es ist eine Überlegung der Weiterbildung einen Bremsbelag vorzuschlagen, welcher besonders einfach an der Radfelge montiert und wieder demontiert werden kann. Zudem kann durch die geeignete Wahl des Bremsbelagträgers zusätzlich die thermische Isolation gegenüber der Radfelge begünstigt werden.

In einer weiteren bevorzugten Ausgestaltung ist vorgesehen, dass das Radmodul eine, insbesondere elektrisch betriebene, Antriebsvorrichtung, insbesondere eine einen Elektromotor aufweist, welche zum Antrieb des Rads ausgebildet und/oder geeignet ist. Insbesondere ist die Antriebsvorrichtung eine elektrische Maschine. Die Antriebsvorrichtung ist radial innerhalb der Radfelge angeordnet bzw. in diese integriert. Dabei weist die Antriebsvorrichtung einen drehfest mit der Radachse verbundenen Stator sowie einen drehfest mit der Radfelge verbundenen Rotor auf. In einem Fahrbetrieb ist ein Antriebsmoment durch die Antriebsvorrichtung erzeugt, welches auf den Rotor und somit das Rad wirkt, sodass das Rad um die Drehachse angetrieben wird. Insbesondere wird durch den als thermischen Isolator ausgebildeten Bremsbelag, die Antriebsvorrichtung vor einer Überhitzung geschützt, wodurch die Betriebssicherheit und die Lebensdauer der Antriebsvorrichtung deutlich erhöht werden kann.

Vorzugsweise sind der rotierende Bremspartner und die Antriebsvorrichtung benachbart, insbesondere unmittelbar benachbart zueinander angeordnet. Insbesondere weisen diese einen axialen Abstand oder Zwischenraum von weniger als 3cm, insbesondere weniger als 2 cm und im Speziellen weniger als 1 cm auf. Dadurch kann das Radmodul besonders kompakt aufgebaut werden.

Die Bremskörpereinrichtung bzw. ein Grundkörper der Bremskörpereinrichtung, welcher den stationären Bremspartner trägt, ist vorzugsweise aus einem Vollmaterial, z.B. Metall, insbesondere aus Aluminium gefertigt. Die Bremskörpereinrichtung bzw. weist vorzugsweise einseitig auf einer radial ausgebildeten Kreisfläche eine Kühlstruktur auf. Die Kühlstruktur ist vorzugsweise als eine oder mehrere Kühlrippen zum Austausch von Wärmeenergie der Bremskörpereinrichtung mit einer Umgebung, z.B. Umgebungsluft, ausgebildet. Die Kühlrippen sind vorzugsweise in das Vollmaterial der Bremskörpereinrichtung eingebracht. Beispielsweise sind die Kühlrippen durch Einfräsungen in die eine radiale Kreisfläche der Bremskörpereinrichtung oder beim Urformen eingebracht. Vorzugsweise stehen der stationärer Bremspartner und der Grundkörper in einem thermischen Kontakt. Insbesondere liegen diese in einer Radialebene in einer thermischen Kontaktfläche flächig aneinander. Vorzugsweise ist die thermische Kontaktfläche ebenfalls als eine Ringfläche. Besonders bevorzugt weist die thermische Kontaktfläche nicht weniger als 50 % der Bremsfläche, die gleiche Fläche wie die Bremsfläche oder eine größere Fläche auf.

Somit wird durch den Bremsbelag ein thermischer Transport in Richtung der Antriebsvorrichtung verhindert. Durch die Bremsscheibe wird dagegen der thermische Transport in den Grundkörper der Bremskörpereinrichtung gefördert, wobei durch die Kühlstruktur die Wärme abgeleitet werden kann.

Vorzugsweise bildet das Radmodul einen Innenraum, wobei die beiden Bremspartner in dem Innenraum angeordnet sind. Insbesondere ist der Innenraum auf der einen axialen Seite durch das Gehäuse und/oder die Bremskörpereinrichtung und auf der anderen axialen Seite durch den stationären Bremspartner und/oder die Radfelge und/oder die Antriebseinrichtung begrenzt. Radial außenseitig ist es bevorzugt, dass der Innenraum durch die Radfelge begrenzt ist. Insbesondere verbleibt zwischen der Bremskörpereinrichtung und der Radfelge nur ein Ringspalt, wobei sich der Ringspalt in axialer Richtung erstreckt, so dass die Bremskörpereinrichtung relativ zu der Radfelge bewegt werden kann. Besonders bevorzugt ist das Radmodul dadurch als ein gekapseltes Radmodul ausgebildet, wobei die Kapselung durch ein Zusammenwirken von Bremskörpereinrichtung und Radfelge umgesetzt ist.

Ein weiterer Gegenstand der Erfindung betrifft ein Fahrzeug mit dem Radmodul wie dieses bereits zuvor beschrieben wurde. Es ist besonders bevorzugt vorgesehen, dass das Fahrzeug ein Elektroroller oder ein Elektroscooter ist. Insbesondere weist das Fahrzeug genau ein Radmodul auf, wobei das Radmodul wahlweise für ein Vorder- oder Hinterrad des Fahrzeugs dient. Bevorzugt ist das Radmodul über die Radachse an der Radgabel oder dem Rahmen festgelegt ist. Im Speziellen kann die Radgabel mit einem Lenker des Fahrzeugs verbunden sein, sodass das Radmodul und somit das Fahrzeug gelenkt werden kann.

Weitere Merkmale, Vorteile und Wirkungen der Erfindung ergeben sich aus der nachfolgenden Beschreibung bevorzugter Ausführungsbeispiele der Erfindung. Dabei zeigen:
Figur 1 eine dreidimensionale Darstellung eines Fahrzeugs mit einer Bremseinheit als ein Ausführungsbeispiel der Erfindung;
Figur 2 eine schematische Schnittdarstellung der Bremseinheit aus der Figur 1 als ein weiteres Ausführungsbeispiel der Erfindung.
Figur 3 eine dreidimensionale, schematische axiale Darstellung der Bremseinheit aus der Figur 1;
Figur 4 eine schematische Schnittdarstellung des Radmoduls aus der Figur 1 als ein weiteres Ausführungsbeispiel der Erfindung;
Figur 5 eine dreidimensionale Draufsicht auf die Bremseinheit der vorhergehenden Figuren.

Einander entsprechende oder gleiche Teile sind in den Figuren jeweils mit den gleichen Bezugszeichen versehen.

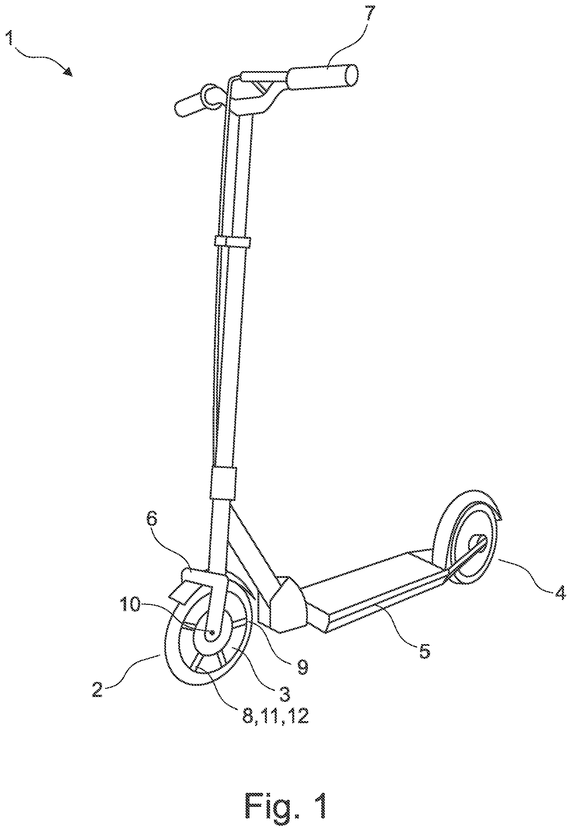

Figur 1 zeigt in einer dreidimensionalen Darstellung ein Fahrzeug 1, wobei das Fahrzeug 1 als ein Elektroroller, Elektrotretroller oder Elektroscooter, auch als sogenannter E-Scooter bekannt, ausgebildet ist. Das Fahrzeug 1 weist hierzu ein Radmodul 2 mit einem Rad 3 auf, welches ein Vorderrad des Fahrzeugs 1 bildet. Das Radmodul 2 dient insbesondere zum elektrischen Antrieb des Fahrzeugs 1. Zudem weist das Fahrzeug 1 ein, insbesondere antriebsloses, Hinterrad 4 auf, welches an einem Fahrzeugrahmen 5 des Fahrzeugs 1 drehbar gelagert ist.

Das Fahrzeug 1 weist eine Radgabel 6 auf, wobei das Radmodul 2 in der Radgabel 6 drehbar gelagert ist. Die Radgabel 6 ist über einen Lenker 7 schwenkbeweglich mit dem Rahmen 5 verbunden, sodass das Radmodul 2 zur Lenkung des Fahrzeugs 1 über den Lenker 7 verschwenkt werden kann.

Das Rad 3 des Radmoduls 2 weist eine Radfelge 8 und einen Reifen 9 auf, wobei der Reifen 9 auf der Radfelge 8 angeordnet ist. Beispielsweise ist die Radfelge 8 als eine Stahl-, Alu- oder Kunststofffelge ausgebildet. Beispielsweise ist der Reifen 9 als ein mit Luft befüllter Gummireifen ausgebildet.

Das Radmodul 3 weist eine Radachse 10 auf, welche mit ihrer Längsachse eine Hauptachse H definiert. Das Rad 3 ist mit seiner Rotationsachse koaxial zu der Radachse 10 angeordnet. Die Radachse 10 ist an der Radgabel 6 festgelegt, wobei die Radfelge 8 über zwei Lagereinrichtungen, z.B. Wälzlager, drehbar auf der Radachse 10 gelagert ist.

Zum Antrieb des Rades 3 weist das Radmodul 2 eine in die Radfelge 8 integrierte Antriebsvorrichtung 11, z.B. ein Elektromotor, auf. Die Antriebsvorrichtung 11 weist einen drehfest mit der Radachse 10 verbundenen Stator auf, welcher in axialer Richtung in Bezug auf die Hauptachse H zwischen den beiden Lagereinrichtungen angeordnet ist. Zudem weist die Antriebsvorrichtung 12 einen drehfest mit der Radfelge 8 verbundenen Rotor auf. In einem Fahrbetrieb des Fahrzeugs 1 wird die Radfelge 8 durch die Antriebsvorrichtung 11 angetrieben, wobei das Rad 3 um die Hauptachse H rotiert.

Das Radmodul 2 weist eine Bremsvorrichtung 12 auf, welche zur Übertragung eines Bremsmoments auf das Rad 3 dient. Die Bremsvorrichtung 12 ist als eine Reibbremse ausgebildet und auf einer Seite der Radfelge 8 angeordnet und/oder mit der Radfelge 8 wirkverbunden.

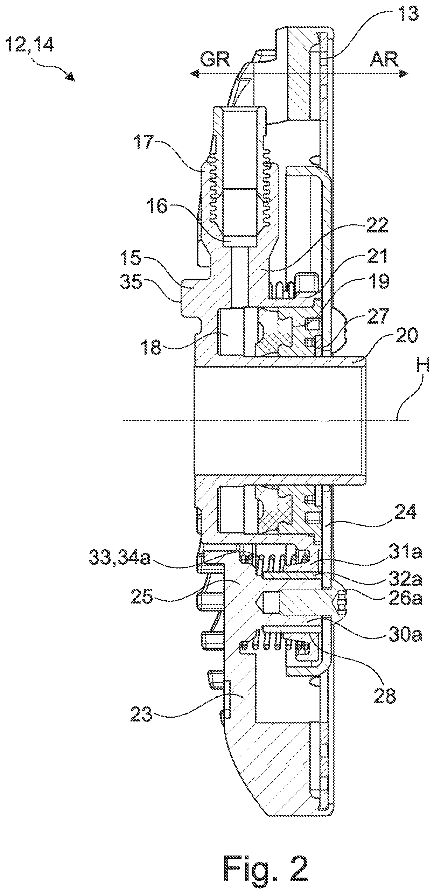

Die Bremsvorrichtung 12 weist einen ringförmigen, insbesondere die Hauptachse H umlaufenden, Bremsbelag als einen rotierenden Bremspartner sowie eine Bremsscheibe 13 (Figur 2) als stationären Bremspartner auf, wobei der Bremsbelag und die Bremsscheibe 13 in Bezug auf die Hauptachse H koaxial zueinander angeordnet sind. Der Bremsbelag ist in Bezug auf die Hauptachse H an einer axialen Stirnseite der Radfelge 8 drehfest montiert, sodass der Bremsbelag im Fahrbetrieb durch die Radfelge 8 mitgenommen wird und um die Hauptachse H rotiert. Die Bremsscheibe 13 ist in einer axialen Richtung AR zu dem Bremsbelag hin und in einer axialen Gegenrichtung GR von dem Bremsbelag weg bewegbar. In Umlaufrichtung um die Hauptachse H ist die Bremsscheibe 13 drehfest mit der Radachse 10 oder der Radgabel 6 gekoppelt.

In einem betätigten Zustand der Bremsvorrichtung 12 kontaktiert die Bremsscheibe 13 mit dem Bremsbelag, sodass ein Reibschluss gebildet wird, um das rotierende Rad 3 durch Reibung zwischen der Bremsscheibe 13 und dem Bremsbelag abzubremsen.

Die Figur 2 zeigt einen schematischen Längsschnitt durch eine Bremseinheit 14, wobei die Bremseinheit 14 den gabelfesten Teil der Bremsvorrichtung 12 bildet, insbesondere trägt die Bremseinheit 14 die Bremsscheibe 13 und verschiebt diese in axialer Richtung AR und Gegenrichtung GR.

Die Bremseinheit 14 weist ein Gehäuse 15 auf, wobei das Gehäuse 15 koaxial zu der Hauptachse H angeordnet und drehfest an der Radgabel 6 angeordnet ist. Die Bremseinheit 14 weist eine Hydraulikeinrichtung 16 auf, wobei die Hydraulikeinrichtung 16 in dem Gehäuse 15 angeordnet, insbesondere integriert ist.

Die Hydraulikeinrichtung 16 weist einen Anschluss 17 auf, über den sie mit einem hydraulischen Druck beaufschlagt werden kann. Der Anschluss 17 ist mit einem Ringraum 18 als Druckraum strömungstechnisch verbunden, wobei der Ringraum 18 einen Zylinder der Hydraulikeinrichtung 16 bildet. Der Ringraum 18 ist koaxial zu der Hauptachse H angeordnet. In dem Ringraum 18 ist ein Ringkolben 19 angeordnet, wobei der Ringkolben 19 in dem Ringraum 18 als Zylinder hydraulisch in axialer Richtung AR verschoben werden kann. Der Ringkolben 19 ist in axialer Richtung zweiteilig ausgebildet. Das Gehäuse 15 weist einen Aufnahmeabschnitt 20 zur Aufnahme der Radachse 10 auf, wobei der Aufnahmeabschnitt 20 eine Innenwand des Ringraums 18 bildet. Ferner weist das Gehäuse 15 eine Außenwand 21 auf, wobei die Außenwand 21 den Ringraum 18 radial außen begrenzt. Der Aufnahmeabschnitt 20 sowie die Außenwand 21 sind als einstückiger Gehäusegrundkörper 22 ausgebildet.

Die Bremseinheit 14 weist eine Bremskörpereinrichtung 23 auf, wobei die Bremskörpereinrichtung 23 die Bremsscheibe 13 trägt und gemeinsam mit dieser in axialer Richtung AR bzw. in axialer Gegenrichtung GR durch die Hydraulikeinrichtung 16 verschoben wird. Die Bremskörpereinrichtung 23 weist eine Kraftverteilungsplatte 24 auf, wobei diese aus Stabilitätsgründen als ein Topf mit einem Kragen ausgebildet ist. In einem radialen Innenbereich liegt die Kraftverteilungsplatte 24 auf dem Ringkolben 19 auf, so dass die Kraftverteilungsplatte 24 bei einer axialen Bewegung des Ringkolbens 19 mitgeführt wird. Die Bremskörpereinrichtung 23 weist einen Bremsgrundkörper 25 auf, wobei der Bremsgrundkörper 25 die Bremsscheibe 13 trägt. Der Bremsgrundkörper 25 ist über eine erste, eine zweite und eine dritte Schraubverbindung 26 a, b, c mit der Kraftverteilungsplatte 24 verbunden, so dass bei der axialen Bewegung der Bremsgrundkörper 25 und damit die Bremsscheibe 13 in axialer Richtung AR mitgeführt wird.

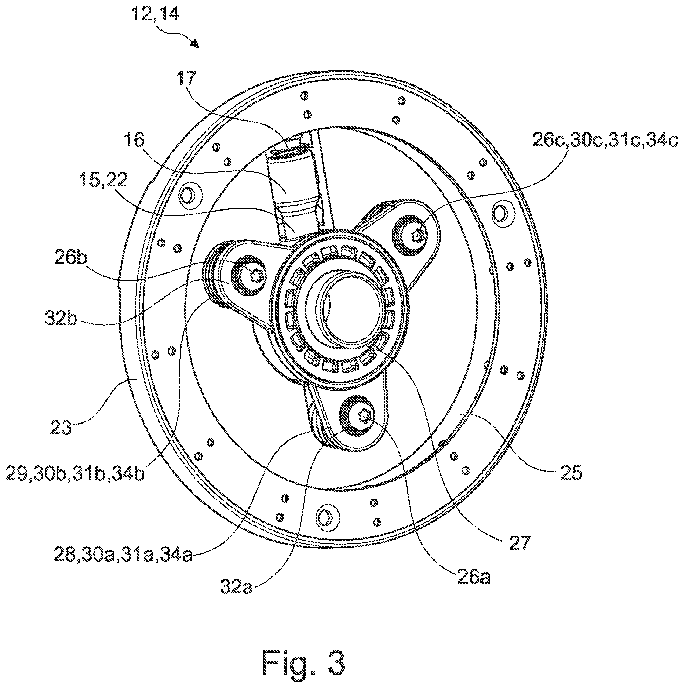

Die Figur 3 zeigt eine axiale Draufsicht auf die Bremseinheit 14 in einer dreidimensionalen Darstellung. Dabei ist jedoch die Kraftverteilungsplatte 24 grafisch unterdrückt, so dass die darunterliegenden Komponenten erkennbar sind. Zum einen ist nochmals der Ringkolben 19 zu erkennen, wobei der Ringkolben 19 über eine Dichtung 27 gegen eindringende Verschmutzungen geschützt ist. Zum anderen sind die Schraubverbindungen 26 a, b, c zu erkennen, welche jeweils voneinander um 120° versetzt angeordnet sind.

Für eine Führung des Bremsgrundkörpers 25 mit der Kraftverteilungsplatte 24 und dem Ringkolben 19 in Querrichtung zur axialen Richtung AR weist die Bremseinheit 14 eine Masterführung 28 und eine Hilfsführung 29 auf. Die Masterführung 28 und die Hilfsführung 29 sind koaxial zu den Schraubverbindungen 26 a, b und/oder ebenfalls um 120° versetzt angeordnet. Unter der dritten Schraubverbindung 26 c befindet sich keine Führung, sondern nur eine Fixierung zwischen der Kraftverteilungsplatte 24 und dem Bremsgrundkörper 25.

Funktional betrachtet ist das radiale Spiel bei der Masterführung 28 kleiner ausgeführt als bei der Hilfsführung 29. Diese Ausbildung soll helfen, eine Überdefinition zu vermeiden. Auf diese Weise ist sichergestellt, dass der Bremsgrundkörper 25 und damit die Bremsscheibe 13 verklemmungsfrei verfahren werden kann. Eine weitere technische Wirkung der Masterführung 28 oder Hilfsführung 29 liegt darin, dass beim Bremsvorgang eingeleitete Drehmomente um die Hauptachse H von der Bremsscheibe 13 über den Bremsgrundkörper 25 zu dem Gehäuse 15 geleitet werden kann. Das radiale Spiel kann wahlweise rotationssymmetrisch lokal bei den jeweiligen Führungen 28 oder 29 gemessen werden, alternativ hierzu wird das radiale Spiel in Umlaufrichtung um die Hauptachse H gemessen.

Die Figur 2 zeigt in der Schnittdarstellung die Masterführung 28, wobei die Hilfsführung 29 von dem Aufbau identisch ausgebildet ist. Die Masterführung 28 weist einen ersten Achsabschnitt 30 a auf, wobei der Achsabschnitt 30 a einstückig aus dem Bremsgrundkörper 25 ausgeformt ist. Auf der radialen Innenseite ist ein Gewinde vorgesehen, in das eine Schraube eingreift, um die Schraubverbindung 26 a zu bilden. Die Hilfsführung 29 weist einen zweiten Achsabschnitt 30 b auf, die dritte Schraubverbindung 26 c weist einen dritten Achsabschnitt 30 c auf, wobei der zweite und der dritte Achsabschnitt 30 b, c genauso aufgebaut sind wie der erste Achsabschnitt 30 a, so dass auf dessen Beschreibung verwiesen wird.

Die Masterführung 28 weist einen ersten Führungsabschnitt 31 a auf, wobei der erste Führungsabschnitt 31 a den ersten Achsabschnitt 30 a aufnimmt. Insbesondere ist der erste Führungsabschnitt 31 a koaxial und konzentrisch zu dem ersten Achsabschnitt 30 a angeordnet. Die Hilfsführung 29 weist einen zweiten Führungsabschnitt 31 b auf, die dritte Schraubverbindung 26 c weist einen dritten Führungsabschnitt 31 c auf, wobei der zweite und der dritte Führungsabschnitt 31 b, c genauso aufgebaut sind wie der erste Führungsabschnitt 31 a, so dass auf dessen Beschreibung verwiesen wird.

Die Masterführung 28 weist eine erste Führungshülse 32 a auf, wobei die erste Führungshülse 32 a auf den ersten Achsabschnitt 30 a aufgesetzt ist und eine Führungsfläche für den ersten Führungsabschnitt 31 a bereitstellt. Die Hilfsführung 29 weist eine zweite Führungshülse 32 b auf, die auf den zweiten Achsabschnitt 30 b aufgesetzt ist und eine zweite Führungsfläche für den zweiten Führungsabschnitt 31 a bereitstellt. Die dritte Schraubverbindung 26 c weist keine Führungshülse auf, so dass das radiale Spiel wahlweise als sehr groß, insbesondere größer als das erste und das zweite radiale Spiel, bezeichnet werden kann oder die dritte Schraubverbindung 26 c keine Führungsfunktion umsetzt.

Somit werden die aufgrund des Bremsvorgangs eingeleiteten Drehmomente um die Hauptachse H von der Bremsscheibe 13 über den Bremsgrundkörper 25 nachfolgend über die Masterführung 28 und die Hilfsführung 29 in das Gehäuse 15 eingeleitet. Das Gehäuse 15 weist einen Formschlussabschnitt 35 auf, welcher in die Radgabel 6 eingreift, so dass das Drehmoment in die Radgabel 6 abgeleitet werden kann.

Die Bremseinheit 14 weist eine Rückstelleinrichtung 33 auf, wobei die Rückstelleinrichtung 33 durch drei Rückstellfedern 34 a, b, c gebildet ist. In der Figur 2 ist die erste Rückstellfeder 34 a gezeigt, welche als eine Druckfeder ausgebildet ist, die koaxial zu der Masterführung 18 und/oder zu dem ersten Achsabschnitt 30 a angeordnet ist und bei einer axialen Bewegung der Bremsscheibe 13 in axialer Richtung AR komprimiert wird. Die zweite und die dritte Rückstellfeder 34 b, c sind koaxial zu der Hilfsführung 29 bzw. koaxial zu dem zweiten Achsabschnitt 30 b bzw. koaxial zu dem dritten Achsabschnitt 30 c angeordnet und werden bei der axialen Bewegung der Bremsscheibe 13 in axialer Richtung AR ebenfalls komprimiert.

Sobald der hydraulische Druck in der Hydraulikeinrichtung 16 nachlässt kann die Bremsscheibe 13 in der axialen Gegenrichtung GR durch die Federkraft der Rückstellfedern 34 a, b, c wieder zurückgestellt werden.

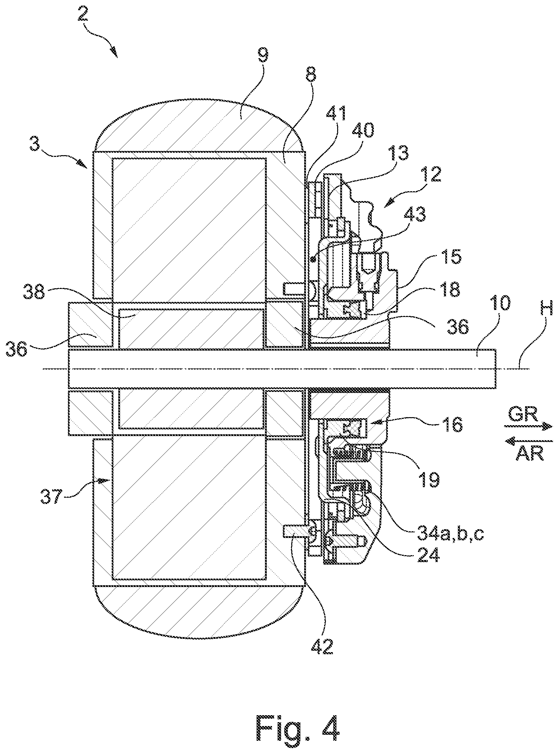

Figur 4 zeigt in einer schematischen Schnittdarstellung ein Radmodul 2 z.B. aus der Figur 1 als ein weiteres Ausführungsbeispiel der Erfindung. Dabei bezeichnen ähnliche bzw. gleiche Bezugszeichen ähnliche oder gleiche Komponenten wie in den vorhergehenden Figuren. Insbesondere wird für diese Komponenten auf die vorhergehende Beschreibung verwiesen.

Das Radmodul 3 weist die Radachse 10 auf, welche mit ihrer Längsachse eine Drehachse D definiert. Das Rad 3 ist koaxial zu Drehachse D auf der Radachse 10 angeordnet. Die Radachse 10 ist an der Radgabel 6 festgelegt, wobei die Radfelge 8 über zwei Lagereinrichtungen 36, z.B. Wälzlager, drehbar auf der Radachse 10 gelagert ist.

Zum Antrieb des Rades 3 weist das Radmodul 2 eine in die Radfelge 8 integrierte Antriebsvorrichtung 37, z.B. ein Elektromotor, auf. Die Antriebsvorrichtung 37 weist einen drehfest mit der Radachse 10 verbundenen Stator 38 auf, welcher in axialer Richtung in Bezug auf die Hauptachse zwischen den beiden Lagereinrichtungen 36 angeordnet ist. Zudem weist die Antriebsvorrichtung 37 einen drehfest mit der Radfelge 8 verbundenen Rotor 39 auf. In einem Fahrbetrieb des Fahrzeugs 1 wird ein Antriebsmoment zwischen dem Stator 38 und dem Rotor 39 erzeugt, sodass die Radfelge 8 durch die Antriebsvorrichtung 37 angetrieben wird und das Rad 3 um die Hauptachse H rotiert.

Die Bremsvorrichtung 12 weist einen ringförmigen, insbesondere die Hauptachse H umlaufenden, Bremsbelag 40 als rotierenden Bremspartner sowie die Bremsscheibe 13 auf, wobei der Bremsbelag 40 und die Bremsscheibe 13 in Bezug auf die Hauptachse H koaxial zueinander angeordnet sind. Der Bremsbelag 40 ist in Bezug auf die Hauptachse H an einer axialen Stirnseite der Radfelge 8 drehfest montiert, sodass der Bremsbelag 40 im Fahrbetrieb durch die Radfelge 8 mitgenommen wird und um die Hauptachse H rotiert. Die Bremsscheibe 13 ist in der axialen Richtung AR zu dem Bremsbelag 40 hin und in der axialen Gegenrichtung GR von dem Bremsbelag 40 weg bewegbar. In Umlaufrichtung um die Hauptachse H ist die Bremsscheibe 13 drehfest mit der Radachse 10 gekoppelt.

Die Bremsvorrichtung 12 weist einen Bremsbelagträger 41 auf, welcher den Bremsbelag 40 an der Radfelge 8 trägt. Beispielsweise ist der Bremsbelag 40 stoffschlüssig auf den Bremsbelagträger 41 aufgebracht. Der Bremsbelagträger 41 ist ringförmig, z.B. als ein Blechring, ausgebildet und an der Radfelge 2 über Befestigungsmittel 42, insbesondere über mehrere Schrauben, befestigt. Der Bremsbelagträger 41 ist so an der Radfelge 8 angeordnet, dass er koaxial und/oder konzentrisch an der Radfelge 8 angeordnet ist.

In einem betätigten Zustand der Bremsvorrichtung 12, kontaktiert die Bremsscheibe 13 mit dem Bremsbelag 40, sodass das Bremsmoment durch einen Reibschluss gebildet wird um das rotierende Rad 3 durch Reibung zwischen der Bremsscheibe 13 und dem Bremsbelag 40 abzubremsen. Bei einer starken Bremsung entwickeln sich, insbesondere an dem Bremsbelag 40, hohe Temperaturen, welche zum Überhitzen der Antriebsvorrichtung 37 führen können. Zudem kann die Lebensdauer sinken, da die Materialien in der Antriebsvorrichtung 37 bei hohen Temperaturen schneller altern.

Diesbezüglich ist vorgesehen, dass der Bremsbelag 40 und/oder der Bremsbelagträger 41 als ein thermischer Isolator ausgebildet sind, um die Radfelge 8 und somit die Antriebsvorrichtung 37 vor einwirkender Wärme zu isolieren, die durch die Bremsreibung erzeugt wird. Hierzu kann der Bremsbelag 40 beispielsweise ein Reibmittel aus einem organischen Werkstoff, wie z.B. Glas-, Gummi- oder Karbonfasern, aufweisen.

Dadurch dass der Bremsbelag 40 und/oder der Bremsbelagträger 41 an der Radfelge 8 angeordnet ist, kann die Bremsvorrichtung 12 in vorteilhafter Weise besonders bauraumsparend und besonders schlank und schmal ausgebildet werden. Zudem kann die Bremsvorrichtung 12 aufgrund der konzentrischen Ausgestaltung der Bremsvorrichtung 12 in einfacher Weise an eine Größe des Rades 3, insbesondere an eine Größe der Radfelge 8, angepasst werden.

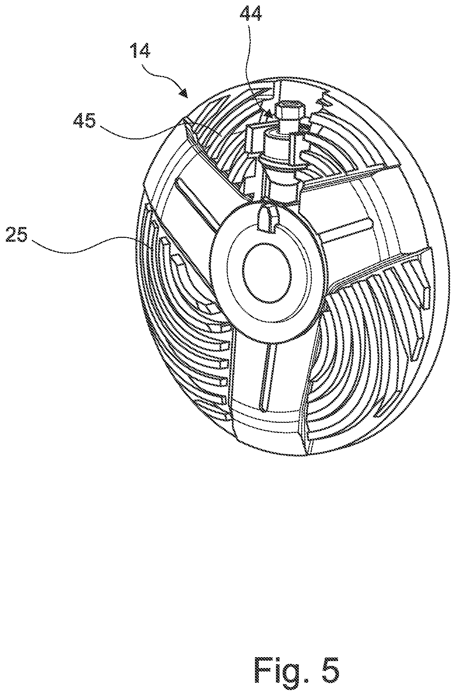

Zwischen der Radfelge 8 bzw. der Antriebsvorrichtung 11 und der Bremskörpereinrichtung 23 ergibt sich ein Innenraum 43, welcher radial innerhalb von Bremsscheibe 13 und/oder von dem Bremsbelag 40 angeordnet ist. Um in diesem Bereich einen Wärmestau zu vermeiden, kann eine axiale Öffnung 44 (vergleiche Figur 5) für einen Luftaustausch vorgesehen sein.

Die Figur 5 zeigt eine schematische dreidimensionale Ansicht auf die Bremseinheit 14, wobei zum einen die axiale Öffnung 44 zu erkennen ist. Ferner ist zu erkennen, dass auf der axialen Außenseite Kühlstrukturen 45 in Form von Kühlrippen einstückig in den Bremsgrundkörper 25 eingebracht sind, so dass die Oberfläche des Bremsgrundkörpers 25 vergrößert ist und aufgenommene Wärme von der Bremsscheibe 13 oder aufgrund von einem Wärmestau in dem Innenraum 43 über Wärmeleitung in die Umgebung abgeleitet werden kann.

### Bezugszeichenliste

- 1: Fahrzeug
- 2: Radmodul
- 3: Rad
- 4: Hinterrad
- 5: Fahrzeugrahmen
- 6: Radgabel
- 7: Lenker
- 8: Radfelge
- 9: Reifen
- 10: Radachse
- 11: Antriebsvorrichtung
- 12: Bremsvorrichtung
- 13: Bremsscheibe
- 14: Bremseinheit
- 15: Gehäuse
- 16: Hydraulikeinrichtung
- 17: Anschluss
- 18: Ringraum
- 19: Ringkolben
- 20: Aufnahmeabschnitt
- 21: Außenwand
- 22: Gehäusegrundkörper
- 23: Bremskörpereinrichtung
- 24: Kraftverteilungsplatte
- 25: Bremsgrundkörper
- 26a, b, c: Schraubverbindungen
- 27: Dichtung
- 28: Masterführung
- 29: Hilfsführung
- 30 a, b, c: Achsabschnitten
- 31 a, b, c: Führungsabschnitt
- 32 a, b: Führungshülse
- 33: Rückstelleinrichtung
- 34a,b,c: Rückstellfedern
- 35: Formschlussabschnitt
- 36: Lagereinrichtungen
- 37: Antriebsvorrichtung
- 38: Stator
- 39: Rotor
- 40: Bremsbelag
- 41: Bremsbelagträger
- 42: Schrauben
- 43: Innenraum
- 44: axiale Öffnung
- 45: Kühlstrukturen

## Patentansprüche

1. Radmodul (2) für ein als Elektroroller oder Elektroscooter ausgebildetes Fahrzeug, aufweisend eine Bremseinheit (14)
mit einem Gehäuse (15),
mit einer Bremskörpereinrichtung (23), wobei die Bremskörpereinrichtung (23) einen stationären Bremspartner einer Bremsvorrichtung (12) für das Fahrzeug (1) trägt, wobei das Gehäuse (15) und/oder die Bremskörpereinrichtung (23) eine Hauptachse (H) definiert,
mit einer Aktoreinrichtung zur Bewegung der Bremskörpereinrichtung relativ zu dem Gehäuse (15), um eine Bremskraft zu erzeugen, wobei die Aktoreinrichtung zur axialen Bewegung der Bremskörpereinrichtung (23) mit einer Bremsscheibe (13) ausgebildet ist,
wobei der stationäre Bremspartner als die Bremsscheibe (13) ausgebildet ist, wobei das Radmodul (2) ein Rad (3) sowie einen rotierenden Bremspartner der Bremsvorrichtung (12) aufweist, wobei der rotierender Bremspartner mit dem Rad (3) drehfest verbunden ist,
**dadurch gekennzeichnet, dass** die Aktoreinrichtung als eine Hydraulikeinrichtung (16) ausgebildet ist, wobei die Hydraulikeinrichtung (16) einen Ringraum (18) und einen Ringkolben (19) aufweist, wobei der Ringraum (18) und der Ringkolben (19) umlaufend zu der Hauptachse (H) ausgebildet sind,
und dass die Bremseinheit (14) eine Führungseinrichtung aufweist, welche bei einem axialen Verfahren der Bremskörpereinrichtung (23) relativ zu dem Gehäuse (15) die Bremskörpereinrichtung (23) in radialer Richtung führt, wobei die Führungseinrichtung eine Masterführung (28) und eine Hilfsführung (29) aufweist, die außermittig zu der Hauptachse (H) angeordnet und nicht koaxial, zu der Hauptachse (H) platziert sind

2. Radmodul nach Anspruch 1, **dadurch gekennzeichnet, dass** die Bremsscheibe (13) aus Metall oder Keramik ausgebildet ist.

3. Radmodul nach Anspruch 1 oder 2, **dadurch gekennzeichnet, dass** die Bremsscheibe (13) eine Bremsfläche bereitstellt, wobei die Bremsfläche als eine Kreisringfläche ausgebildet ist und/oder sich in Umlaufrichtung zu der Hauptachse (H) durchgehend erstreckt.

4. Radmodul (2) nach einem der vorhergehenden Ansprüche, **dadurch gekennzeichnet, dass** der rotierende Bremspartner als ein Bremsbelag (40) ausgebildet ist.

5. Radmodul (2) nach nach einem der vorhergehenden Ansprüche, **gekennzeichnet durch** eine Antriebsvorrichtung (11), wobei die Antriebsvorrichtung (11) in dem Rad (3), insbesondere in einer Radfelge (8) des Rades (3) angeordnet ist.

6. Fahrzeug (1) mit dem Radmodul (12) nach einem der Ansprüche 1 bis 5, **dadurch gekennzeichnet, dass** das Fahrzeug als ein Elektroroller oder als ein Elektroscooter ausgebildet ist.

## Claims

1. A wheel module (2) for a vehicle designed as an electric motorcycle or an electric scooter having a brake unit (14),
having a housing (15),
having a brake body device (23), wherein the brake body device (23) supports a stationary braking partner in a braking device (12) for the vehicle (1), wherein the housing (15) and/or the brake body device (23) define a main axis (H),
having an actuator device for moving the brake body device relative to the housing (15) in order to generate a braking force, wherein the actuator device is configured for axial movement of the brake body device (23) having a brake disc (13),
wherein the stationary braking partner is configured as the brake disc (13), wherein the wheel module (2) has a wheel (3) and a rotating braking partner of the braking device (12), wherein the rotating braking partner is non-rotatably connected to the wheel (3),
**characterised in that** the actuator device is configured as a hydraulic device (16), wherein the hydraulic device (16) has an annular space (18) and an annular piston (19), wherein the annular space (18) and the annular piston (19) are formed circumferentially about the main axis (H), and **in that** the brake unit (14) has a guide device that guides the brake body device (23) in the radial direction when the brake body device (23) is moved axially relative to the housing (15), wherein the guide device has a master guide (28) and an auxiliary guide (29), which are arranged off-centre to the main axis (H) and are not placed coaxially to the main axis (H).

2. The wheel module according to claim 1, **characterised in that** the brake disc (13) is made from metal or ceramic.

3. The wheel module according to claim 1 or 2, **characterised in that** the brake disc (13) provides a braking surface, wherein the braking surface is formed as a circular ring surface and/or extends continuously in a direction of rotation to the main axis (H).

4. The wheel module (2) according to any one of the preceding claims, **characterised in that** the rotating braking partner is formed as a brake pad (40).

5. The wheel module (2) according to any one of the preceding claims, **characterised by** a drive device (11), wherein the drive device (11) is arranged in the wheel (3), in particular in a wheel rim (8) of the wheel (3).

6. A vehicle (1) having the wheel module (12) according to any one of claims 1 to 5, **characterised in that** the vehicle is designed as an electric motorcycle or as an electric scooter.

## Revendications

1. Module de roue (2) pour un véhicule réalisé sous la forme d'une trottinette électrique ou d'un scooter électrique, présentant une unité de freinage (14)
comportant un boîtier (15),
comportant un dispositif de corps de frein (23), dans lequel le dispositif de corps de frein (23) porte un partenaire de freinage stationnaire d'un dispositif de freinage (12) pour le véhicule (1), dans lequel le boîtier (15) et/ou le dispositif de corps de frein (23) définissent un axe principal (H),
comportant un dispositif actionneur pour le mouvement du dispositif de corps de frein par rapport au boîtier (15), afin de produire une force de freinage, le dispositif actionneur étant réalisé pour le mouvement axial du dispositif de corps de frein (23) avec un disque de frein (13), dans lequel le partenaire de freinage stationnaire est réalisé sous la forme du disque de frein (13), le module de roue (2) présentant une roue (3) ainsi qu'un partenaire de freinage rotatif du dispositif de freinage (12), le partenaire de freinage rotatif étant relié solidaire en rotation à la roue (3),
**caractérisé en ce que** le dispositif actionneur est réalisé sous la forme d'un dispositif hydraulique (16), le dispositif hydraulique (16) présentant un espace annulaire (18) et un piston annulaire (19), l'espace annulaire (18) et le piston annulaire (19) étant réalisés de manière à faire le tour de l'axe principal (H) et **en ce que** l'unité de freinage (14) présente un dispositif de guidage, qui, lors d'un déplacement axial du dispositif de corps de frein (23) par rapport au boîtier (15) guide le dispositif de corps de frein (23) dans la direction radiale, le dispositif de guidage présentant un guidage maître (28) et un guidage auxiliaire (29), qui sont agencés excentrés par rapport à l'axe principal (H) et ne sont pas placés coaxialement par rapport à l'axe principal (H).

2. Module de roue selon la revendication 1, **caractérisé en ce que** le disque de frein (13) est réalisé en métal ou en céramique.

3. Module de roue selon la revendication 1 ou 2, **caractérisé en ce que** le disque de frein (13) fournit une surface de freinage, dans lequel la surface de freinage est réalisée sous la forme d'une surface d'anneau circulaire et/ou s'étend de manière continue dans le sens circonférentiel par rapport à l'axe principal (H).

4. Module de roue (2) selon l'une quelconque des revendications précédentes, **caractérisé en ce que** le partenaire de freinage rotatif est réalisé sous la forme d'une garniture de frein (40).

5. Module de roue (2) selon l'une quelconque des revendications précédentes, **caractérisé par** un moyen d'entraînement (11), le moyen d'entraînement (11) étant agencé dans la roue (3), en particulier dans une jante de roue (8) de la roue (3).

6. Véhicule (1) pourvu du module de roue (12) selon l'une quelconque des revendications 1 à 5, **caractérisé en ce que** le véhicule est réalisé sous la forme d'une trottinette électrique ou d'un scooter électrique.
